# EUROPEAN PATENT SPECIFICATION

(11) **EP 2 148 318 B1**
(45) Date of publication and mention of the grant of the patent: **11.10.2017**
(21) Application number: 09004619.4
(22) Date of filing: 31.03.2009
(51) Int. Cl.: G09G 3/34, G09G 3/36

(54) **Method of boosting a display image, controller unit for performing the method, and display apparatus having the controller unit**
Verfahren zur Verstärkung eines Anzeigebildes, Steuerungseinheit zur Durchführung des Verfahrens und Anzeigevorrichtung mit der Steuerungseinheit
Procédé pour amplifier une image d'affichage, unité de contrôleur pour effectuer le procédé, et appareil d'affichage disposant de l'unité de contrôleur

(30) Priority: 25.07.2008 KR 20080072694
(43) Date of publication of application: 27.01.2010
(73) Proprietor: Samsung Display Co., Ltd., Gyeonggi-do (KR)
(72) Inventor: Park, Se-Ki, Suwon-si Gyeonggi-do (KR); Yeo, Dong-Min, Buk-gu, Daegu (KR); Kim, Gi-Cherl, Asan-si, Chungcheongnam-do (KR); Song, Si-Joon, Suwon-si Gyeonggi-go (KR); Kim, Jung-Hyeon, Hwaseong-si Gyeonggi-do (KR)
(74) Representative: Dr. Weitzel & Partner

(56) References cited:
- US-A1- 2005 248 555
- HANFENG CHEN, JUNHO SUNG, TAEHYEUN HA, YUNGJUN PARK: "Locally pixel-compensated backlight dimming on LED-backlit LCD TV", JOURNAL OF THE SID, vol. 2007, no. 15/12, 2007, pages 981-988, XP040426644, 1475 S. BASCOM AVE., STE. 114, CAMPBELL, CA 95008-4006 USA
- PIERRE DE GREEF AND HENDRIEK GROOT HULZE NXP SEMICONDUCTORS (FOUNDED BY PHILIPS) ET AL: "39.1: Adaptive Dimming and Boosting Backlight for LCD-TV Systems", SID 2007, 2007 SID INTERNATIONAL SYMPOSIUM, SOCIETY FOR INFORMATION DISPLAY, LOS ANGELES, USA, vol. XXXVIII, 20 May 2007 (2007-05-20), pages 1332-1335, XP007013259, ISSN: 0007-966X

## Description

### BACKGROUND

### 1. Field of Disclosure

Example embodiments relate to a method of boosting a display image, a controller unit for performing the method, and a display apparatus having the controller unit. More particularly, example embodiments relate to a method of boosting a portion of a display image, a controller unit for performing the method, and a display apparatus having the controller unit.

### 2. Related Technology

Generally, flat panel displays such as liquid crystal displays (LCDs) include a backlight assembly which serves as a source of white light and a transmissivity control such as an LCD panel disposed in front for selectively controlling transmissivity based on color and/or pixel location and thus displaying a desired image.

The typical LCD panel includes an array substrate having a plurality of pixel electrodes and thin-film transistors (TFTs) electrically connected to the pixel electrodes, a color filtering substrate having a common electrode and a plurality of color filters, and an LC layer interposed between the array substrate and the color filtering substrate.

The orientation of molecules in the LC layer is altered by electric fields formed between the pixel electrodes and the common electrode, and thus the light transmissivity of light passing through the LC layer is changed. Here, when the light transmissivity is increased to the maximum for all primary colors (e.g., R, G, B), the LCD panel may display a white image of a relatively high luminance. However, when the light transmissivity is decreased to the minimum for all colors, the LCD is intended to display a black image of a relatively low luminance.

However, when an attempt is made conventionally to display a relatively dark image of low luminance, it is difficult for the LC layer to have all its molecules arranged in a same uniform direction, and as a result, undesired light leakage may occur when trying to generate relatively dark images having low gray level values in the LCD panel. That is, it is difficult for the LCD panel to display a fully black first image portion having pixels driven at a lowest gray level value adjacent to an almost black second image portion having pixels driven at a next lowest gray level value such that contrast between the two can be easily perceived. In other words, contrast ratio (CR) of a relatively dark image displayed on the LCD panel may be decreased due to inability to drive the LC layer to a fully light blocking mode.

To prevent such a decrease in the contrast ratio of an image, the backlight assembly may include a plurality of dimming blocks that are independently driven through a local dimming method. Here, the local dimming method is a driving method in which an intentionally dimmed backlight is provided to a pixel area which is intended to be displaying a black image or a relatively low gray level value to thereby decrease luminance by means of backlight dimming control, thereby increasing the contrast ratio.

Recently, a local boosting method has been developed, which further improves luminance in a portion area of the dimming blocks in comparison with a peripheral area of the dimming blocks. The local boosting method can improve a dynamic contrast ratio several times with respect to the conventional local dimming method.

However, when the luminance of a first area in the image is increased by using the local boosting method, the luminance of a peripheral second area adjacent to the first area may be undesirably increased due to light spreading. That is, boost light tends to spread into the peripheral second area such that the display quality may be decreased.

US 2005/248555 A1 discloses a liquid crystal display with local dimming. Convolution with a point spread function is used when determining the backlight luminance at pixel level.

In the article "Locally pixel-compensated backlight dimming on LED-backlit LCD TV" of the JOURNAL OF THE SID, no. 15/12, 2007, pages 981-988, HANFENG CHEN et al. discuss an LCD with local and global backlight dimming and local boosting. In the proposed algorithm, LED intensities above average are enhanced to improve the brightness of objects on dark background and increase contrast. Convolution with a point spread function is used when determining the backlight luminance at pixel level.

In the article "39.1: Adaptive Dimming and Boosting Backlight for LCD-TV Systems" of the 2007 SID INTERNATIONAL SYMPOSIUM, vol. XXXVIII, 20 May 2007 (2007-05-20), pages 1332-1335, PIERRE DE GREEF et al. discuss an LCD with 0D, 1D, 2D and 2D color backlight dimming and 0D, 1D and 2D color adaptive backlight boosting.

### SUMMARY

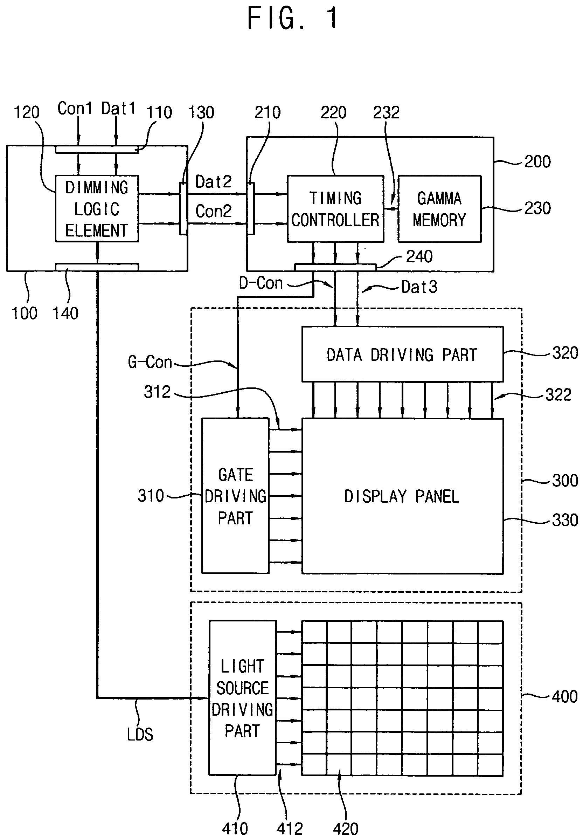

The invention is set forth in the independent claims. Merely the first embodiment related to the features depicted in Figs. 1 to 8 represents an embodiment of the presently claimed invention. All other occurrences of the word "embodiment(s)" refer to examples which were originally filed but which do not represent embodiments of the presently claimed invention; these examples are still shown for illustrative purposes only. Example embodiments provide a method of boosting a display image capable of preventing light from spreading to a peripheral area adjacent to a boosting area.

Example embodiments include a controller unit for performing the above-mentioned boosting method.

Example embodiments further include a display apparatus having the above-mentioned controller unit.

According to one aspect, there is provided a method of boosting a display image. In the method according to the disclosure, image data supplied from an external device is automatically analyzed to determine whether or not the image data satisfies boosting conditions where the conditions are set in order to increase backlight luminance in a portion area (hereinafter referred to as boosting area). Then, a luminance value is increased in a signal corresponding to the boosting area of local dimming signals generated by the image data to drive dimming blocks, when the image data satisfies the boosting conditions. Then, peripheral area data corresponding to the image data is converted into conversion image data so that the luminance of a peripheral area adjacent to the boosting area may be decreased.

In an example embodiment, data corresponding to the entire area except for the peripheral area of the image data may be converted by using a reference gamma curve, and the peripheral area data may be converted by using a conversion gamma curve for displaying a darker luminance image than an image corresponding to the reference gamma curve.

In an example embodiment, the gamma value of the conversion gamma curve may be increased in proportion to the maximum luminance value in the boosting area. Moreover, the gamma value of the conversion gamma curve that becomes closer to the boosting area may be increased, and the gamma value of the conversion gamma curve that becomes farther apart from the boosting area may be decreased. Furthermore, the reference gamma curve may have a gamma of about 2.2, and the conversion gamma curve may have a larger gamma in of a range of about 2.2 to about 3.0.

In the converting the peripheral area data into the conversion image data, the peripheral area data may be converted into intermediate image data by using an intermediate gamma curve, and the intermediate image data may be converted into the conversion image data by using the reference gamma curve. Here, the sum of the intermediate gamma curve and the reference gamma curve may be substantially equal to the conversion gamma curve.

In an example embodiment, a dithering the conversion image data by N × N pixel units (wherein 'N' is an integer greater than or equal to 2) may be further performed.

In an example embodiment, the peripheral area may be from the outer portion of the boosting area to an area that corresponds to a reference percentage of the maximum luminance value in the boosting area. Here, the reference percentage may have a range of about 1% and about 10%. Alternatively, the peripheral area may surround the outer portion of the boosting area.

According to another aspect, a controller unit includes a local dimming logic board and a controller board. The local dimming logic board generates a plurality of local dimming signals in response to image data applied from an external device. When the image data satisfies boosting conditions set to increase a luminance in a portion area (hereinafter referred to as boosting area), the local dimming logic board increases the luminance value of a signal corresponding to the boosting area of the local dimming signals. The controller board receives the image data from the local dimming logic board, and converts peripheral area data corresponding to a peripheral area of the image data into conversion image data so that the luminance of the peripheral area adjacent to the boosting area may be decreased.

In an example embodiment, the controller board may dither the conversion image data in the N × N pixel units (wherein 'N' is an integer greater than or equal to 2).

In an example embodiment, the controller board may include a timing controller and a gamma memory. The timing controller includes a gamma conversion part converting the peripheral area data into the conversion image data, and a signal dithering part dithering the conversion image data converted by the gamma conversion part. The gamma memory provides the gamma conversion part with information for a gamma curve for converting into the conversion image data.

The controller unit according to another embodiment comprises the local dimming logic board and the controller board. The local dimming logic board generates a plurality of local dimming signals in response to image data applied from an external device. When the image data satisfies boosting conditions set to increase a luminance in a portion area (hereinafter referred to as boosting area), the local dimming logic board increases the luminance value of a signal corresponding to the boosting area of the local dimming signals. The controller board receives the image data from the local dimming logic board, and converts peripheral area data corresponding to a peripheral area of the image data into conversion image data so that the luminance of the peripheral area adjacent to the boosting area may be decreased.

In an example embodiment, the controller board may dither the conversion image data into N × N pixel units (wherein 'N' is an integer greater than or equal to 2).

In an example embodiment, the controller board may include a timing controller and a gamma memory. The timing controller may include a gamma conversion part converting the peripheral area data into the conversion image data, and a signal dithering part may dither the conversion image data converted by the gamma conversion part. The gamma memory providing the gamma conversion part with information for a gamma curve for converting into the conversion image data.

According to still another aspect, a controller unit includes a local dimming logic board and a controller board. The local dimming logic board generates a plurality of local dimming signals in response to image data applied from an external device. When the image data satisfies boosting conditions set to increase a luminance in a portion area (hereinafter referred to as boosting area), the local dimming logic board increases the luminance value of a signal corresponding to the boosting area of the local dimming signals, and converting a peripheral area data of the image data into intermediate image data so that a luminance in the peripheral area adjacent to the boosting area may be decreased. The controller board receives the intermediate image data from the local dimming logic board, and converting the intermediate image data into the conversion image data.

In an example embodiment, the local dimming logic board may dither the intermediate image data into N × N pixel units ('N' is an integer greater than or equal to 2).

In an example embodiment, the local dimming logic board may include a dimming logic element and a conversion memory. The dimming logic element may include a boosting dimming part generating the local dimming signal and boosting a dimming signals corresponding to the boosting area when the image data satisfies the boosting conditions, an intermediate conversion part converting the peripheral area data into the intermediate image data, and an intermediate dithering part dithering the intermediate image data. The conversion memory may provide the intermediate conversion part with information for an intermediate gamma curve for converting into the intermediate image data.

According to further still another aspect, a controller unit includes a local dimming logic board, a controller board, a light-generating unit and a display unit. The local dimming logic board generates local dimming signals in response to image data applied from outside. When the image data satisfies the boosting conditions set up to increase the luminance in a portion area (hereinafter referred to as boosting area), the local dimming logic board increases the luminance value in a signal corresponding to the boosting area of the local dimming signals. The controller board receives the image data from the local dimming logic board, and changes the data corresponding to the peripheral area of the image data into the conversion image data so that the luminance in the peripheral area adjacent to the boosting area may be decreased. The light-generating unit receives the local dimming signal from the local dimming logic board, and generates light in a local dimming manner in response to the local dimming signal. The display unit receives the conversion image data from the controller board, and displaying the image in response to the conversion image data.

In an example embodiment, the controller board may dither the conversion image data into N × N pixel units (wherein 'N' is an integer greater than or equal to 2).

According to further still another aspect, a controller unit includes a local dimming logic board, a controller board, a light-generating unit and a display unit. The local dimming logic board generates local dimming signals in response to image data applied from outside. When the image data is satisfies the boosting conditions set up to increase the luminance in a portion area (hereinafter referred to as boosting area), the local dimming logic board increases the luminance value in a signal corresponding to the boosting area of the local dimming signals and converting the data corresponding to the peripheral area of the image data into the intermediate image data so that the luminance in the peripheral area adjacent to the boosting area may be decreased. The controller board receives the intermediate image data from the local dimming logic board, and changes the intermediate data into the conversion image data. The light-generating unit receives the local dimming signal from the local dimming logic board, and generates light in a local dimming manner in response to the local dimming signal. The display unit receives the conversion image data from the controller board and displaying the image in response to the conversion image data.

In an example embodiment, the local dimming logic board may dither the conversion image data into N × N pixel units (wherein 'N' is an integer greater than or equal to 2).

According to still further another aspect, there is provided a method of boosting a display image. In the method, image data applied from an external device is analyzed to classify a first area for increasing a luminance in a display image and a second area adjacent to the first area. Then, the luminance of the first area is increased higher than the luminance value of the first area included in the image data. Then, the luminance of the second area is maintained at the luminance value of the second area included in the image data.

In an example embodiment, maintaining the luminance of the second area at the luminance value of the second area may include decreasing the luminance of the second area by an increased amount by which the luminance of the second area is increased due to an increment of the luminance in the first area. Here, a decreasing value of the luminance in the second area becomes closer to the first area may be increased, and the decreasing value of the luminance in the second area that becomes farther apart from the first area may be decreased.

According to some example embodiments, in order to decrease a luminance in a peripheral area adjacent to a boosting area, peripheral area data corresponding to the peripheral area is converted, thereby preventing light from spreading into the outer portion of the boosting area.

### BRIEF DESCRIPTION OF THE DRAWINGS

The above and other features and advantages will become more apparent by describing in detailed example embodiments thereof with reference to the accompanying drawings.
FIG. 1 is a block diagram schematically illustrating a display apparatus according to a first embodiment;
FIG. 2 is a graph illustrating an areal luminance distribution relationship before employment of boosting and a luminance distribution relation after employment of boosting in a light-generating unit such as that of FIG. 1;
FIG. 3 is a plan view illustrating a boosting area and a peripheral area at dimming blocks of the light-generating unit of FIG. 1;
FIG. 4 is an enlarged block diagram illustrating a portion of the controller board of FIG. 1;
FIG. 5 is a graph illustrating a reference gamma curve and a conversion gamma curve for which representing data is stored in a gamma memory of FIG. 4;
FIG. 6A is a plan view illustrating the relationship between pixels of the display panel of FIG. 1 and the dimming blocks of FIG. 3;
FIG. 6B is an enlarged view illustrating a portion 'A' of FIG. 6A;
FIGS. 7 and 8 are schematic diagrams illustrating a process of dithering into 2 × 2 pixel units in the controller board of FIG. 1;
FIG. 9 is a block diagram schematically illustrating a display apparatus according to Embodiment 2;
FIG. 10 is an enlarged block diagram illustrating a portion of a local dimming logic board of FIG. 9; and
FIG. 11 is a block diagram illustrating a process which converts image data of FIG. 9.

### DETAILED DESCRIPTION

The present disclosure of invention is described more fully hereinafter with reference to the accompanying drawings, in which example embodiments are shown. The present disclosure, however, should not be construed as limited to the illustrated exemplary embodiments set forth herein. In the drawings, the sizes and relative sizes of layers and regions may be exaggerated for clarity.

It will be understood that when an element or layer is referred to as being "on," "connected to" or "coupled to" another element or layer, it can be directly on, connected or coupled to the other element or layer or intervening elements or layers may be present. In contrast, when an element is referred to as being "directly on," "directly connected to" or "directly coupled to" another element or layer, there are no intervening elements or layers present. Like numerals generally refer to like elements throughout. As used herein, the term "and/or" includes any and all combinations of one or more of the associated listed items.

It will be understood that, although the terms first, second, third etc. may be used herein to describe various elements, components, regions, layers and/or sections, these elements, components, regions, layers and/or sections should not be limited by these terms. These terms are only used to distinguish one element, component, region, layer or section from another region, layer or section. Thus, a first element, component, region, layer or section discussed below could be termed a second element, component, region, layer or section without departing from the teachings.

Spatially relative terms, such as "beneath," "below," "lower," "above," "upper" and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" the other elements or features. Thus, the exemplary term "below" can encompass both an orientation of above and below. The device may be otherwise oriented (rotated 90 degrees or at other orientations) and the spatially relative descriptors used herein interpreted accordingly.

The terminology used herein is for the purpose of describing particular example embodiments only and is not intended to be limiting. As used herein, the singular forms "a," "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

Example embodiments are described herein with reference to cross-sectional illustrations that are schematic illustrations of idealized example embodiments (and intermediate structures). As such, variations from the shapes of the illustrations as a result, for example, of manufacturing techniques and/or tolerances, are to be expected. Thus, example embodiments should not be construed as limited to the particular shapes of regions illustrated herein but are to include deviations in shapes that result, for example, from manufacturing. For example, an implanted region illustrated as a rectangle will, typically, have rounded or curved features and/or a gradient of implant concentration at its edges rather than a binary change from implanted to non-implanted region. Likewise, a buried region formed by implantation may result in some implantation in the region between the buried region and the surface through which the implantation takes place. Thus, the regions illustrated in the figures are schematic in nature and their shapes are not intended to illustrate the actual shape of a region of a device and are not intended to limit the scope.

Unless otherwise defined, all terms (including technical and scientific terms) used herein have the same meaning as commonly understood by one of ordinary skill in the art to which this disclosure directly pertains. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

FIG 1 is a block diagram schematically illustrating a display apparatus according to a first embodiment (Embodiment 1).

Referring to FIG. 1, a display apparatus according to Embodiment 1 includes a controller unit including a local dimming logic circuit 100 (e.g., printed circuit board) and a controller circuit 200 (e.g., board), a display unit 300 for displaying an image, and a light-generating unit 400 for generating a backlight.

The local dimming logic circuit 100 may include a signal receiving part 110, a dimming logic element 120, an image signal outputting part 130 and a dimming signal outputting part 140.

The signal receiving part 110 may receive an input image data signal, Dat1 and an input image control signal, Con1 from an external image sourcing circuit (e.g., board; not shown) which are to be applied to the dimming logic element 120. For example, the signal receiving part 110 may convert levels of the input image data Dat1 and levels of the input image control signal Con1 into other levels used in the local dimming logic board 100.

Here, the input image control signal Con1 may include a clock signal for synchronizing the input image data Dat1, a horizontal synchronization signal which indicates a start or end of a line of the input image data Dat1, a vertical synchronization signal which indicates a start or end of a frame of the input image data Dat1, and data enable signal which indicates a valid interval of the input image data Dat1.

The dimming logic element 120 receives the input image data Dat1 and the input image control signal Con1 from the signal receiving part 110, and outputs driving image data Dat2 and a driving image control signal Con2 in response to the input image data Dat1 and the input image control signal Con1. Here, the driving image data Dat2 may be a signal substantially equal to the input image data Dat1, and the driving image control signal Con2 may be a signal substantially equal to the input image control signal Con1.

The dimming logic element 120 generates the local dimming signal LDS in response to the input image data Dat1, and in some instances boosts a backlight dimming signal which corresponds to a first area (hereinafter referred to as the boosting area or BA) in the image frame which the dimming logic element 120 determines should be boosted when the input image data Dat1 satisfies certain boosting conditions. That is, the local dimming signal LDS includes a dimming signal that normally remains moderate or low for all areas but which is boosted such that the luminance of the boosting area is increased to a backlighting maximum when conditions warrant such boosting.

The image signal output part 130 receives the driving image data Dat2 and the driving image control signal Con2 from the dimming logic element 120 to transmit to controller board 200. Here, the image signal output part 120 may convert levels of the driving image data Dat2 and the driving image control signal Con2 into suitable levels for transmitting of serial signals for example between circuit boards.

The dimming signal output part 140 receives the local dimming signal LDS from the dimming logic element 120 to transmit the local dimming signal LDS to the light-generating unit 400. Here, the dimming signal output part 130 may convert levels of the local dimming signal LDS into suitable levels for transmitting of serial signals for example between circuit boards.

The controller board 200 may include a controller receiving part 210, a timing controller 220, a gamma memory 230 and a controller output part 240.

The controller receiving part 210 may receive the driving image data Dat2 and the driving image control signal Con2 from the image signal output part 130, and transmit the driving image data Dat2 and the driving image control signal Con2 to the timing controller 220. For example, the controller receiving part 210 may convert levels of the driving image data Dat2 and the driving image control signal Con2 into levels used in the controller board 200.

The timing controller 220 receives the driving image data Dat2 and the driving image control signal Con2 from the controller receiving part 210, and receives a gamma signal 232 having information for the gamma curve of the given display panel 330 from the gamma memory 230. The timing controller 220 outputs a gate control signal G-Con, a data control signal D-Con2 and conversion image data Dat3 in response to the driving image data Dat2, the driving image control signal Con2 and the gamma signal 232.

The gamma memory 230 stores information for the gamma curve to provide the timing controller 220 with the gamma signal 232. Alternatively, the gamma memory 230 may be disposed in the timing controller 220.

The controller output part 240 may receive the gate control signal G-Con, the data control signal D-Con and the conversion image data Dat3 from the timing controller 220 to transmit the gate control signal G-Con, the data control signal D-Con and the conversion image data Dat3 to the display unit 300. For example, the controller output part 240 may convert levels of the gate control signal G-Con, the data control signal D-Con and the conversion image data Dat3 into suitable levels for transmitting.

The display unit 300 may include a gate driving part 310, a data driving part 320 and a display panel 330.

The gate driving part 310 receives the gate control signal G-Con from the controller output part 240 to output a plurality of gate signals 312 of a digital row-selecting type in response to the gate control signal G-Con.

The data driving part 320 receives the conversion image data Dat3 and the data control signal D-Con from the controller output part 240 to output a plurality of data signals 322 of an analog type in response to the conversion image data Dat3 and the data control signal D-Con.

The display panel 330 receives the gate signals 312 from the data driving part 310, and receives the data signals 322 from the data driving part 320. The display panel 330 changes light transmissivity for displaying an image based on the gate and data signals 312 and 322.

The display panel 330 may display an image by using light generated from the light-generating unit 400. For example, the display panel 330 may include a first substrate (not shown), a second substrate (not shown) opposite to the first substrate, and the liquid crystal (LC) layer (not shown) interposed between the first substrate and the second substrate.

The first substrate may include a plurality of gate lines transmitting the gate signals 312, a plurality of data lines transmitting the data signals 322, a plurality of thin-film transistors (TFTs) connected to the gate lines and the data lines at their respective intersections, and a plurality of pixel electrodes electrically connected to the TFTs, respectively. The second substrate may include a plurality of differently colored color filters (e.g., R, G, B) in correspondence with the pixel electrodes and a common electrode layer formed on the entire surface of a substrate. For one example, the color filters may be formed on the second substrate. For another example, the color filters may be formed on the first substrate.

The light-generating unit 400 may include a light source driving part 410 and a plurality of dimming blocks.

The light source driving part 410 may receive the local dimming signal LDS from the dimming signal output part 140, and output a plurality of light source driving signals 412 to the dimming blocks 420, respectively, in response to the local dimming signal LDS.

The dimming blocks 420 are arranged in a matrix shape. The dimming blocks 420 receives the light source driving signals 412 from the light source driving part 410, and generates light by individually being controlled by the light source driving signals 412.

Each of the dimming blocks 42 may include at least one white light-emitting diode unit (not shown). For one example, the LED unit may include a red LED, a green LED and a blue LED. For another example, the LED unit may include a white LED. Alternatively, each of the dimming blocks 420 may include a cold cathode fluorescence lamp (CCFL) or an external electrode fluorescence lamp (EEFL), etc.

In one embodiment, boosting conditions warranting boosting of the dimming signals in a corresponding boosting area BA may mean a case in which, for a given frame, the number of dimming blocks for which the dimming duty cycle is greater than or equal to about 60% is greater than or equal to 1, while a second number such as 48 or more of the dimming blocks out of the total of 128 dimming blocks have a dimming duty cycle less than or equal to about 40%. Here, adjacent ones of the dimming blocks for which the dimming duty cycle is initially set to be greater than or equal to about 60% may define the shape and size of the corresponding boosting area BA.

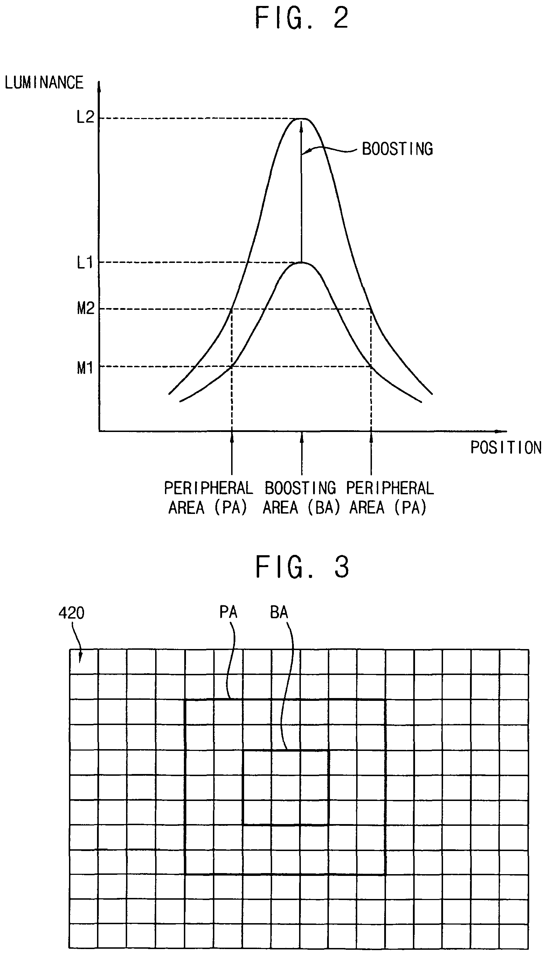

FIG 2 is a graph illustrating an areal luminance distribution relationship before employment of boosting (lower plot) and a luminance distribution after employment of boosting (upper plot) in a light-generating unit such as that of FIG. 1. FIG 3 is a plan view illustrating a boosting area (BA) and a peripheral area (PA) defined by the dimming blocks of the light-generating unit of FIG 1.

Referring to FIGS. 1, 2 and 3, the local dimming signal LDS generated from the dimming logic element 120 may include a dimming signal capable of increasing the luminance of the boosting area BA to the maximum (e.g., 100% duty cycle). That is, the local dimming signal LDS includes a dimming signal capable of increasing the luminance of light generated from at least one of dimming block 420 corresponding to the boosting area BA to the maximum allowed for that area.

When the luminance of the dimming block 420 corresponding to the boosting area BA is boosted, the luminance of the peripheral area PA adjacent to the boosting area BA is also generally increased due to light spreading. That is, when the maximum luminance level before being boosted (L1) is increased to a new greater maximum luminance level after being boosted (L2), the peripheral area luminance level (M1) before being boosted is also increased to a new and higher peripheral area luminance level (M2) after being boosted. Here, for example, the peripheral area PA may be an area of predefined width (e.g., two blocks) surrounding the outer portion of the boosting area BA.

In this embodiment, it is assumed that the peripheral area PA is directly adjacent to the boosting area BA. However in other embodiments, the peripheral area PA may be formed to be spaced apart from the boosting area BA by a predetermined distance.

In the present embodiment, when the luminance of the dimming block 420 corresponding to the boosting area BA is boosted so that the luminance of the boosting area BA is increased from L1 to L2, the otherwise attendant increase of the luminance of the peripheral area PA from M1 to M2 is intelligently suppressed so that light spreading does not substantially increase the luminance in the peripheral area PA. That is, even though the luminance of the dimming block 420 corresponding to the boosting area BA is boosted to be increased, an increase of the luminance of images of the peripheral area PA due to light spreading is compensatingly suppressed.

In the present embodiment, the peripheral PA may be defined as an area which experiences at least a predefined amount of luminance increase due to light spreading, where the PA extends from the outer portion of the boosting area BA to a position corresponding to a minimum luminance increase expressed as a predefined percentage of the maximum luminance value in the boosting area BA. The reference percentage may have a range of between about 1% and about 10%. That is, when the reference percentage is about 1%, the peripheral area PA means an area from extending the outer portion of the boosting area BA to a position corresponding to a luminance gain of about 1% of the maximum luminance value in the boosting area BA. On the other hand, when the reference percentage is about 10%, a dimming block which experiences only a luminance gain of no more than about 9% of the maximum luminance value in the boosting area BA is deemed outside the PA.

The peripheral area PA may be an area from the outer portion of the boosting area BA to a position spaced apart from the peripheral area by one to three dimming blocks. For example, when the number of the dimming blocks 420 is 128 and the size of the display panel 330 is 46 inches (i.e., 116.84 cm), the peripheral area PA may mean the area from the outer portion of the boosting area BA to a position spaced apart from the peripheral area by two dimming blocks 420.

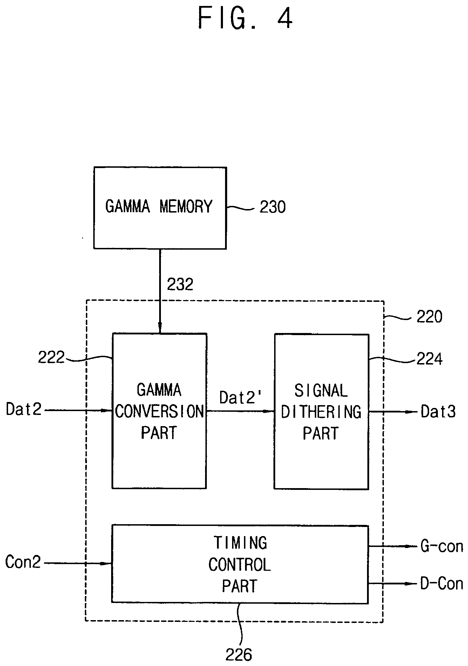

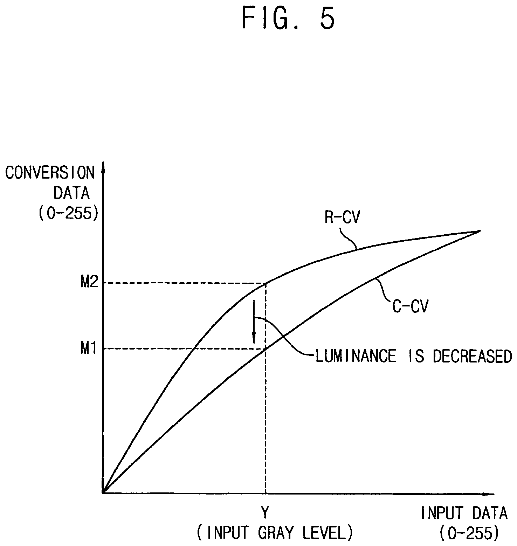

FIG 4 is an enlarged block diagram illustrating a portion of the controller board of FIG 1. FIG. 5 is a graph illustrating a reference gamma curve (R-CV) and a conversion gamma curve (C-CV) whose representative parameters are stored in a gamma memory such as 230 of FIG 4.

Referring to FIGS. 1 to 5, the gamma memory 230 stores first data representing a reference gamma curve R-CV and second data representing a conversion gamma curve C-CV where the latter C-CV curve is selectively employed for displaying a darker image than that of the reference gamma curve R-CV. The gamma memory 230 may store the reference gamma curve R-CV and information for the conversion gamma curve C-CV in a lookup table (LUT) type of data structure. For example, the reference gamma curve R-CV may be a gamma curve with gamma set at 2.2, and the conversion gamma curve C-CV may be a gamma curve with gamma set between 2.2 and 3.0 (in other words, with a larger gamma).

The timing controller 220 may include a gamma conversion part 222, a signal dithering part 224 and a timing control part 226. The signal dithering part 224 is optional and may be omitted.

The gamma conversion part 222 receives the driving image data Dat2 from the controller receiving part 210, and receives the gamma signal 232 having information for the reference gamma curve R-CV and the conversion gamma curve C-CV from the gamma memory 230.

The gamma conversion part 222 selectively gamma converts input data (Dat2) corresponding to the entire frame area except for the peripheral area PA according to the reference gamma curve R-CV, and selectively converts input data (Dat2) corresponding to the peripheral area (PA) according to the conversion gamma curve C-CV to thereby output an intermediate conversion image data Dat2' which is defined according to both curves (R-CV and C-CV). That is, the intermediate conversion image data Dat2' includes first data converted with use of the R-CV curve and second data converted with use of the conversion gamma curve C-CV, where the C-CV curve causes the effective luminance of the display panel to be selectively decreased in the peripheral area PA so as to compensate for the light spreading effect that takes place in the backlighting unit due to boosting in the BA area.

In the present embodiment, as the peripheral area data is converted through the conversion gamma curve C-CV having a gamma value that is higher than that of the reference gamma curve R-CV, the actual luminance of the displayed image in the peripheral area PA may be decreased or returned from the boosted M2 level to back to the pre-boost M1 level. As the result, when a luminance is increased through the backlight boosting process in the boosting area BA, an undesirable luminance increase of the displayed image in the peripheral area PA due to light spreading may be suppressed.

The gamma value of the conversion gamma curve C-CV may be increased in proportion to the maximum luminance value L2 in the boosting area BA. That is, when the maximum luminance value L2 in the boosting area BA is increased, the gamma value of the conversion gamma curve C-CV may be increased from slightly above 2.2 to 3.0. When the maximum luminance value L2 in the boosting area BA is increased, the boosted luminance level, M2 in the peripheral area PA is also increased.

For example, the gamma memory 230 may store information for a plurality of different conversion gamma curves C-CV having a respective plurality of different gamma values according to a variation of the maximum luminance value L2 in the boosting area BA using a lookup table (LUT) data structure type.

The signal dithering part 224 receives the intermediate conversion image data Dat2' from the gamma conversion part 222, and dithers the intermediate conversion image data Dat2' to output the conversion image data Dat3. The signal dithering part 224 dithers the intermediate conversion image data Dat2' in N × N pixel units. Here, 'N' is an integer greater than or equal to 2.

The dithering method at the signal dithering part 224 is designed to increase the resolution of a gray level instead of decreasing the resolution of the display image. Typically, when the peripheral area data is converted through the conversion gamma curve C-CV having a higher gamma value than that of the reference gamma curve R-CV, the resolution at a low gray level displaying the image of a black line may be decreased. That is, although the gray levels of the data before being converted by the conversion gamma curve C-CV individually have different values as each other, the gray levels of the data after being converted by the conversion gamma curve C-CV may have the same values as each other, because the gray level values of the image are only integer value of 0 to 255 and not a decimal value. Thus contrast between two adjacent dark pixels may be lost. Although not shown in Fig. 4, the signal dithering part 224 may be operatively coupled to the Dat2 input line so as to be able to detect when adjacent input pixels differed even though the gamma converted signal Dat2' no longer exhibits the difference.

The timing control part 226 receives the driving image control signal Con2 from the controller receiving part 210, and outputs the gate control signal G-Con and the data control signal D-Con in response to the driving image control signal Con2. Although not explicitly shown with connecting lines, the timing control part 226 may also control operations of the gamma conversion part 222 and/or the signal dithering part 224 in response to the driving image control signal Con2.

The timing controller 220 may further include a dynamic capacitance compensation (hereinafter referred to as DCC) processing part (not shown) and an adaptive color compensation (hereinafter referred to as ACC) processing part (not shown). The DCC processing part applies a higher voltage than the original voltage for one frame when the gray level value of the data is converted so that LC molecules can be forced to rapidly transition from one optical orientation to another. The ACC processing part (not shown) controls to maintain a color balance by decreasing or removing a shifting of color characteristics in accordance with a variation of the gray level value of the data, even though a gray level value is varied.

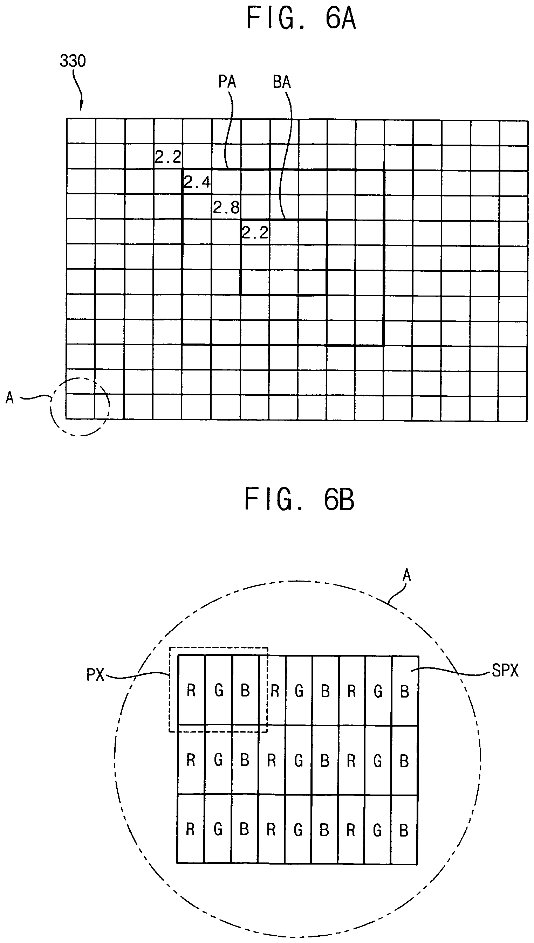

FIG 6A is a plan view illustrating a gamma conversion relationship as applied to pixels of the display panel of FIG 1 that are inside the BA area, inside the PA area and outside the PA area when dimming and boosting is employed for the dimming blocks of FIG 3. FIG 6B is an enlarged view illustrating a portion 'A' of FIG. 6A.

Referring to FIGS. 1 to 6, the display panel 330 includes a plurality of pixels PX arranged in a matrix shape to individually display a dot of the image. Each of the pixels PX includes, for example, three sub-pixels SPX each corresponding to red (R0, green (G), and blue (B) color filters, respectively.

Each of the dimming blocks 330 of the light-generating unit 300 may be sized and shaped to correspond to one or more of the pixels PX. For example, each of the dimming blocks 330 may correspond to nine pixels PX arranged in a 3 × 3 matrix.

The conversion gamma curve C-CV in the peripheral area PA may convert the image data through the different gamma values from each other for each of the dimming blocks 330. Alternatively, the conversion gamma curve C-CV in the peripheral area PA may convert the image data through the different gamma values from each other for each of the pixels PX. Still alternatively, the conversion gamma curve C-CV in the peripheral area PA may convert the image data through the different gamma values from each other for each of the sub-pixels SPX.

The more the pixel for which the conversion gamma curve C-CV is used, is adjacent to the boosting area BA, the more the employed gamma increases. Conversely, the further away from the BA area the pixel is, the more the utilized gamma value decreases. For example, when the peripheral area PA is the area of by the second dimming blocks from the outer of the boosting area BA, the image data corresponding to the first dimming blocks in the outer of the boosting area BA is converted by the gamma curve having a gamma of 2.8 and the image data corresponding to the second dimming blocks in the outer of the boosting area BA is converted by the gamma curve of 2.4. Here, the image data corresponding to the dimming blocks other than those in the peripheral area PA may be converted by the gamma curve of 2.2.

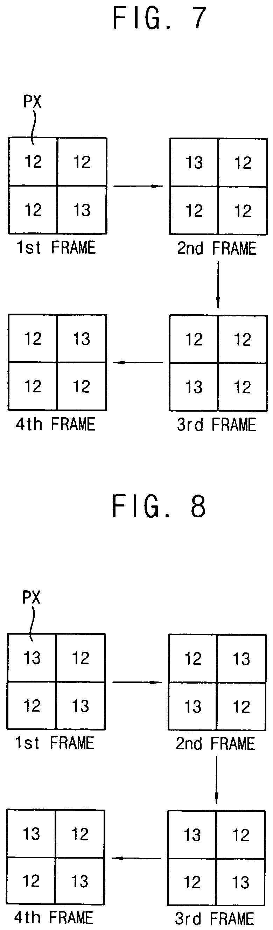

FIGS. 7 and 8 are schematic diagrams illustrating a process of dithering into 2 × 2 pixel units in the controller board of FIG 1.

Referring to FIGS. 1, 4, 7 and 8, a process of being time domain dithered as 2 × 2 pixel units in the signal dithering part 224 will be described.

FIG 7 explains the process of displaying a gray level value of 12.25 through a time domain dithering process. Here, it defines 4 pixels arranged in 2 × 2 as the first to the fourth pixels in order.

During a first frame period, the data of a gray level value of 13 is applied to the first and the fourth pixels, and then the data of a gray level value of 12 is applied to the second and the third pixels. During a second frame period, the data of the gray level value of 13 is applied to the first pixels, and the data of the gray level value of 12 is applied to the second and the fourth pixels, respectively. During a third frame, the data of the gray level value of 13 is applied to the third pixel, and the data of the gray level value of 12 is applied to the first, second and third pixels. During a fourth frame, the data of the gray level value of 13 is applied to the second pixel, and the data of the gray level value of 12 is applied to the first, third and fourth pixels, respectively.

FIG 8 explains the process of displaying the gradation value of 12.5 through a dithering. Here, it defines 4 pixels arranged in 2 × 2 as the first to the fourth pixels in order.

During the first frame, the data of the gray level value of 13 is applied to the first and the fourth pixels, and the data of the gray level value of 12 is applied to the second and third pixels. During the second frame, the data of the gray level value of 13 is applied to the second and third pixels, and the data of the gray level value of 12 is applied to the first and the fourth pixels. During the third frame, the same data of the first frame is applied to the first, second and third pixels. During the fourth frame, the same data of the second frame is applied to the first, third and fourth pixels, respectively.

Hereinafter, a method of boosting a display image according to the present embodiment will be described with reference to FIGS. 1 to 8.

An input image data is applied from an external device, and then a local dimming signal LDS for individually driving dimming blocks 420 is generated in response to the input image data Dat1. When the input image data Dat1 satisfies boosting conditions, a dimming signal corresponding to the boosting area BA is boosted, which will cause boosting of the backlight luminance emitted by the backlight unit in the BA area. In one embodiment, the boosting method of the dimming signal may increase a duty cycle or pulse width of the dimming signal and/or increase amplitude of the dimming signal.

In this embodiment, the boosting conditions may be, for example, a case in which the number of the dimming blocks having a dimming duty of greater than or equal to 60% is greater than or equal to 1, while 48 or more dimming blocks of the total of 128 dimming blocks 420 have a dimming duty less than or equal to about 40%.

During the local dimming signal LDS is generated through the input image data Dat1, the input image data Dat1 may be converted into driving image data Dat2. Here, the driving image data Dat2 may be substantially the same as the input image data Dat1.

Then, peripheral area data corresponding to the peripheral area PA of the driving image data Dat2 is gamma converted into an intermediate conversion image data Dat2', so that a luminance in the peripheral area PA adjacent to the boosting area BA may be appropriately decreased to counter compensate for spreading of boosted backlight. Here, the data of the driving image data Dat2, which corresponds to the entire area except for the peripheral area PA may be converted by the reference gamma curve R-CV, and the peripheral area data may be converted through the conversion gamma curve C-CV for displaying a darker luminance image than that of the reference gamma curve C-CV. For example, the reference gamma curve R-CV may be the gamma curve having a gamma of about 2.2, and the conversion gamma curve C-CV may be the gamma curve having a larger gamma in the range between about 2.2 to about 3.0.

Alternatively, the gamma value of the conversion gamma curve C-CV may increase in proportion to the maximum luminance value L2 in the boosting area BA. Moreover, the gamma value of the conversion gamma curve C-CV increases as the gamma value becomes closer to the boosting area BA, and decreases as the gamma value becomes farther apart from the boosting area BA.

Then, dithering the intermediate conversion image data Dat2' in N × N pixel units, so generating the conversion image data Dat3. Here, the N is an integer greater than or equal to 2. The dithering method is the method increasing the resolution of the gradation instead decreasing the resolution of the display image. That is, the dithering method, when the peripheral area data is converted through the conversion gamma curve C-CV having a higher gamma value than that of the reference gamma curve R-CV, is the method of compensating for decreasing the resolution of the low gradation displaying an image of the black line.

Then, the image, of which the luminance in the peripheral PA may be decreased, is displayed through the conversion image data Dat3.

According to the presently disclosed embodiments, the data corresponding to an entire area except for the peripheral area adjacent to the boosting area of image data is gamma converted according to the reference gamma curve, the peripheral area data corresponding to the peripheral area is selectively converted according to the conversion gamma curve for thereby displaying a darker luminance image than that which would otherwise have been displayed using the reference gamma curve. That is, as the peripheral area data is converted so that the luminance in the peripheral decreases, when the luminance in the boosting area increases the light spreads to the peripheral area, which may suppress the luminance of the image from increasing.

The boosting method of the display image described above in the different view of, that is, in the view of the luminance, will be described.

Image data is input from an external device, and then the image data is analyzed to classify the first area for increasing the luminance of the display image and a second area adjacent to the first area. Here, the first area may correspond to the boosting area BA, and the second area may correspond to the peripheral area PA.

Then, more increases the luminance in the first area than the luminance value in the first area comprised inside the image data. That is, higher increases the luminance in the first area than the primary luminance value in the image data corresponding to the first area.

Then, a luminance in the second area is maintained to with a primary luminance value in the second area which will be included in the image data. That is, the luminance in the second area is maintained to the primary luminance value of the image data corresponding to the second area.

For example, in a method of maintaining the luminance in the second area at the luminance value in the second area, a luminance in the second area may be reduced by an increasing amount by which the luminance in the second area is increased due to the increment of the luminance in the first area. Here, the luminance decreasing amount in the second area is increased when the second area is adjacent to the first area, and the luminance decreasing amount in the second area in decreased when the second area is spaced apart from the first area.

Accordingly, the luminance in the second area (PA) may be decreased via LCD front panel operation by an amount of luminance increase in the second area corresponding to a backlighting luminance increase in the first area (BA), so that an unintended increase of the luminance in the second area (PA) due to light spreading may be prevented.

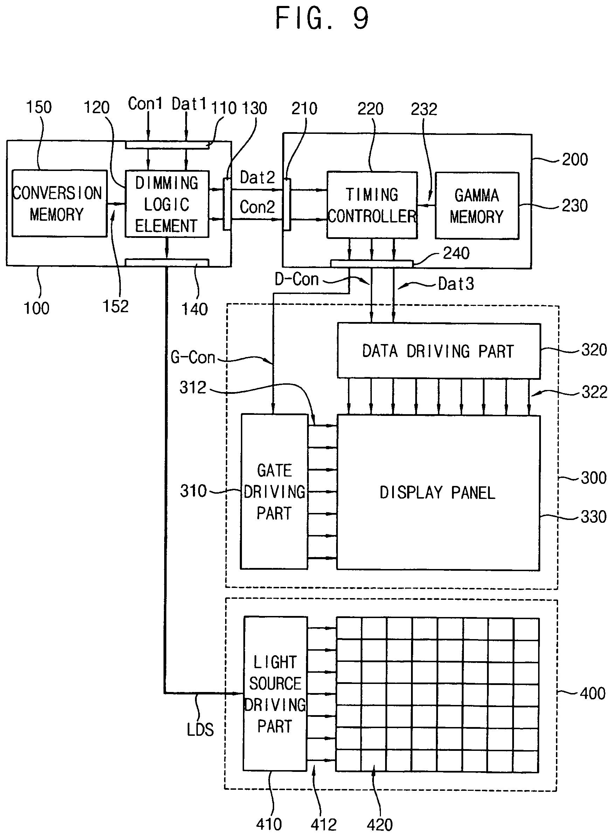

FIG 9 is a block diagram schematically illustrating a display apparatus according to Embodiment 2.

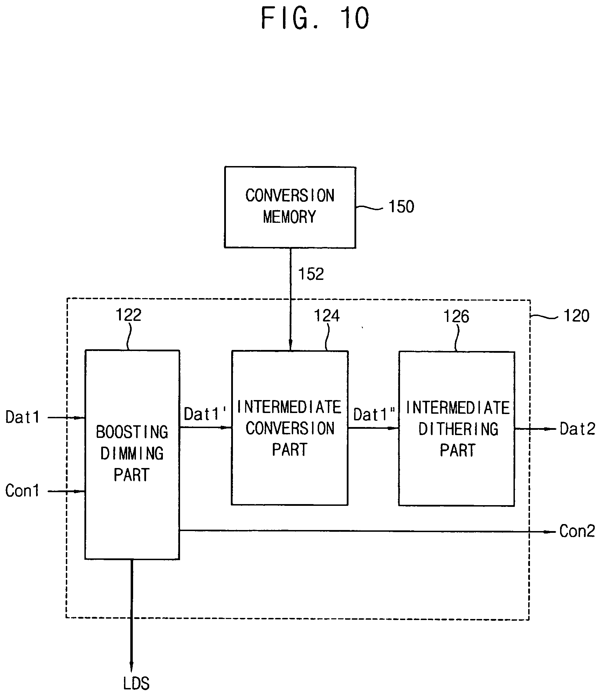

The display apparatus according to Embodiment 2 is substantially the same as the display apparatus of FIGS. 1 to 8 except for the local dimming logic board 100 including memory part 150 and an intermediate conversion part 124 which is illustrated in Fig. 10. Thus, identical reference numerals are used in FIG. 9 to refer to components that are the same or like those shown in FIGS. 1 to 8, and thus, a detailed description thereof will be omitted. Also, it will give the reference mark identical with those of FIG 1 to FIG 8 for the elements substantially identical with the display of Embodiment 1.

Referring to FIG 9, the local dimming logic board 100 may include a signal receiving part 110, a dimming logic element 120, an image signal output part 130, a dimming signal output part 140 and a conversion memory 150.

The signal receiving part 110 may receive the input image data Dat1 and the input image control signal Con1 from the external image board (not shown) and transmit to the dimming logic element 120. For example, the signal receiving part 110 may convert the input image data Dat1 and the input image control signal Con1 into levels used in the local dimming logic board 100.

The dimming logic element 120 receives the input image data Dat1 and the input image control signal Con1 from the signal receiving part 110. The dimming logic element 120 outputs the local dimming signal LDS, the driving image data Dat2 and the driving image control signal Con2 in response to the input image data Dat1 and the input image control signal Con1. Here, the driving image control signal Con2 may be substantially identical with the input image control signal Con.

The image signal output part 130 receives the driving image data Dat2 and the driving image control signal Con2 from the dimming logic element 120 and transmits them to the controller board 200. Here, the image signal output part 120 may convert the driving image data Dat2 and the driving image control signal Con2 into the levels suitable to the transmission of signals and output them.

The dimming signal output part 140 receives the local dimming signal LDS from the dimming logic element 120 and transmits it to the light-generating unit 400. Here, the dimming signal output part 130 may convert the local dimming signal LDS into the level suitable to the transmission of a signal.

The conversion memory 150 stores the information for an intermediate gamma curve employed by the intermediate conversion part 124 of Fig. 10. For example, the conversion memory 150 stores the information for the intermediate gamma curve in a lookup table type. The conversion memory 150 outputs the intermediate gamma signal 152 having the information for the intermediate gamma curve to the dimming logic element 120. For one example, the conversion memory 150 may be disposed as a different and removably connected element from the dimming logic element 120. For another example, the conversion memory 150 may be integrally disposed inside the dimming logic element 120.

FIG 10 is an enlarged block diagram illustrating a portion of a local dimming logic board of FIG 9.

Referring to FIGS. 9 and 10, the dimming logic element 120 may include a boosting dimming part 122, an intermediate conversion part 124 and an intermediate dithering part 126. Here, the intermediate dithering part 126 may be omitted.

The boosting dimming part 122 receives the input image data Dat1 and the input image control signal Con1 from the signal receiving part 110. The boosting dimming part 122 generates the local dimming signal LDS in response to the input image data Dat1, in a case where the input image data Dat1 satisfies the boosting conditions, and boosts the dimming signal corresponding to the boosting area BA to be boosted of the local dimming signal LDS. That is, the local dimming signal LDS comprises the dimming signal boosted the luminance in the boosting area BA to be increased to the maximum.

The boosting dimming part 122 may output the primary intermediate image data Dat1' to the intermediate conversion part 124, in response to the input image data Dat1, and output the driving image control signal Con2 to the controller receiving part 210 of the controller board 200, in response to the input image control signal Con1. Here, the first intermediate conversion image data Dat1' may be substantially identical with the input image data Dat1'.

The intermediate conversion part 124 receives the primary intermediate image data Dat1' from the boosting dimming part 122 and the intermediate gamma signal 152 having the information for the intermediate gamma curve from the conversion memory 150.

The intermediate conversion part 124 gamma converts the peripheral area data corresponding to the peripheral area PA of the primary intermediate conversion image data Dat1' so that the luminance in the peripheral area PA adjacent to the boosting area BA decreases. For example, the intermediate conversion part 124 passes through the data corresponding to an entire area except for the peripheral area PA of the primary intermediate conversion image data Dat1' as it is, and converts the peripheral area PA of the primary intermediate conversion image data Dat1' through the intermediate gamma curve to output the second intermediate conversion image data Dat1". That is, the second intermediate conversion image data Dat1" comprises the data converted by the intermediate gamma curve so that the luminance in the display image in the peripheral area PA appropriately decreases.

The intermediate dithering part 126 receives the second intermediate conversion image data Dat1" from the intermediate conversion part 124, dithers the second intermediate conversion image data Dat1" and outputs the driving image data Dat2 to the controller receiving part 210 of the controller board 200. For example, the intermediate dithering part 126 dithers the second intermediate conversion image data Dat1" in N × N pixel units. Here, the N is a integer greater than or equal to 2. The dithering method of the intermediate dithering part 126 is the method of increasing the resolution of the gradation instead decreasing the resolution of the display image.

Alternatively, the timing controller 220 of the controller board 200 receives the driving image data Dat2 from the controller receiving part 210 and the gamma signal 232 having the information for the reference gamma curve R-CV from the gamma memory 230. The timing controller 220 converts all of the driving image data Dat2 through the reference gamma curve R-CV and outputs the conversion image data Dat3. Meanwhile, the timing controller 220 may perform a different dithering process from that in the intermediate dithering part 126, but also may not perform a different dithering process.

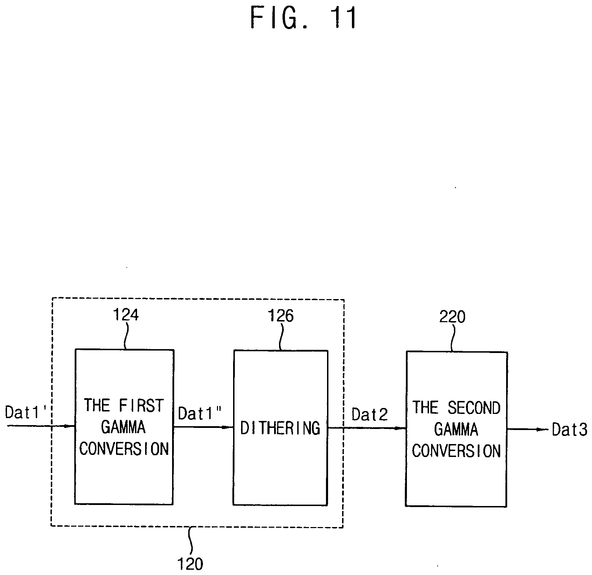

FIG 11 is a block diagram illustrating a process which converts image data of FIG. 9.

Referring to FIGS. 9 and 11, it is intended to explain the process the image data corresponding to the peripheral area PA of the input image data Dat1 is converted.

The input image data Dat1 may be converted into the primary intermediate conversion image data Dat1' by the boosting dimming part 122. Here, the primary intermediate conversion image data Dat1' may be substantially identical with the input image data Dat1.

Then, the primary conversion image data Dat1' is converted into the second intermediate image data Dat1" by the intermediate conversion part 124. That is, on the image data corresponding to the peripheral area PA of the primary conversion image data Dat1', the primary gamma conversion is performed through the intermediate gamma curve provided from the conversion memory 150.

Then, the second intermediate conversion image data Dat1" is dithered by the intermediate dithering part 126 and converted into the driving image data Dat2. That is, the image data corresponding to the peripheral area PA of the second intermediate conversion image data Dat1" may be dithered in N × N pixel units.

Then, the driving image data Dat2 is converted into the conversion image data Dat3 through the reference gamma curve R-CV provided from the gamma memory 230 by the timing controller 220. That is, on the image data corresponding to the peripheral area PA of the driving image data Dat2, the second gamma conversion is performed through the reference gamma curve R-CV.

As described above, on the image data corresponding to the peripheral area PA of the input image data Dat1, the primary gamma conversion is generated by the intermediate gamma curve in the intermediate conversion part 124, and then the second gamma conversion is generated by the reference gamma curve R-CV in the timing controller 220.

Accordingly, when the combined effects of both the intermediate gamma curve and the reference gamma curve R-CV is the conversion gamma curve C-CV, the image data corresponding to the peripheral area PA of the input image data Dat1 may be converted by the conversion gamma curve C-CV.

The conversion gamma curve C-CV may be a gamma curve which capable of displaying the image of a darker luminance than that of the reference gamma curve R-CV. For example, the reference gamma curve R-CV may be the gamma curve of 2.2, and the conversion gamma curve C-CV may be the gamma curve of between 2.2 and 3.0.

The gamma value of the conversion gamma curve may increase in proportion to the maximum luminance value in the boosting area. Also, the more the gamma value of the conversion gamma curve may be closer to the boosting area, the more increase, while apart from the boosting area, the more decrease.

Hereinafter, the boosting method of the display image according to the present embodiment will be described with reference to FIGS. 9 and 11.

The input image data Dat1 is applied from an external device, and the local dimming signal LDS for individually driving the dimming blocks 420 is generated in response to the input image data Dat1. Here, when the input image data Dat1 satisfies the boosting conditions, the dimming signal corresponding to the boosting area BA is boosted, which will be boosted of the local dimming signal LDS. The boosting method of the dimming signal may increase the duty width of the dimming signal or increase amplitude of the dimming signal.

Then, the primary gamma conversion is performed on the image data corresponding to the peripheral area PA of the primary intermediate conversion image data Dat1' through the intermediate gamma curve so that the luminance in the peripheral area PA adjacent to the boosting area BA decreases, and the second intermediate conversion image data Dat1" is generated.

Then, the second intermediate conversion image data Dat1" is dithered in N × N pixel units, and the driving image data Dat2 is generated. Here, the N is an integer greater than or equal to 2.

Then, after performing the second gamma conversion on all of the driving image data Dat2 through the reference gamma curve R-CV, the conversion image data Dat3 is generated. Thus, when the sum of the intermediate gamma curve and the reference gamma curve R-CV is the conversion gamma curve C-CV, the image data corresponding to the peripheral area PA of the input image data Dat1 may be converted by the conversion gamma curve C-CV.

Then, the peripheral area PA displays an image of which the luminance may be decreased by the conversion image data Dat3.

As described above, according to the present embodiment, the image data corresponding to the peripheral area of the input image data is primary converted by the intermediate gamma curve in the local dimming logic board, and then is secondary converted by the reference gamma curve in the timing controller. As a result, as the image data corresponding to the peripheral area of the input image data is converted by the conversion gamma curve such as the sum of the intermediate gamma curve and the reference gamma curve, an increase of the luminance of the image may be suppressed due to light spreading to the peripheral area.

Alternatively, since it is typical that the ordinary timing controller converts the image data by the reference gamma curve, when the dimming logic element is designed in the local dimming logic board so that the image data is in primary converted by the intermediate gamma curve, the ordinary timing controller may be used as it is, thereby reducing the manufacturing costs.

According to the embodiments, in order to decrease a luminance at a boosting area and a peripheral area adjacent to the boosting area in a timing controller, image data is converted, or the image data is converted twice at a dimming logic element and a timing controller, so that an increase of the luminance in the peripheral area due to an increment of the luminance in the boosting area may be suppressed.

The foregoing is illustrative and is not to be construed as limiting thereof. Although a few example embodiments have been described, those skilled in the art will readily appreciate from the above that many modifications are possible in the example embodiments without materially departing from the teachings and disclosed advantages provided herein. The scope is defined by the claims.

## Claims

1. A method of boosting a displayed image of a liquid crystal display by local boosting, the liquid crystal display including a backlight assembly having a plurality of dimming blocks (430) that are independently driven by respective local dimming signals (LDS), wherein boosting comprises increasing the luminance of a portion area of the dimming blocks, the method comprising:
analyzing image data supplied from an external device to determine whether or not the image data satisfies boosting conditions set in order to increase a luminance in the portion area of the dimming blocks (430), hereinafter referred to as boosting area (BA), in comparison with a peripheral area (PA) of the dimming blocks (430) adjacent to the boosting area (BA);
generating the plurality of local dimming signals (LDS) for individually driving the dimming blocks (420) in response to the image data;
increasing the luminance value in the local dimming signals (LDS) corresponding to the boosting area (BA) when the image data satisfies the boosting conditions;
converting the image data of a peripheral area (PA) into conversion image data so that the luminance of the peripheral area (PA) adjacent to the boosting area (BA) is decreased, wherein the step of converting comprises:
gamma converting image data corresponding to an entire area except for the peripheral area (PA) by using a reference gamma curve (R-CV) corresponding to a first gamma value, and gamma converting image data of the peripheral area (PA) by using a conversion gamma curve (C-CV) corresponding to a second gamma value for displaying a darker luminance image than an image corresponding to the reference gamma curve (R-CV).

2. The method of Claim 1, wherein the respective gamma value of the used conversion gamma curve (C-CV) increases in proportion to the maximum luminance value in the boosting area (BA).

3. The method of Claim 1, wherein
the reference gamma curve (R-CV) has a gamma value of about 2.2, and the conversion gamma curve (C-CV) has a larger gamma value in the range between about 2.2 to about 3.0.

4. The method of Claim 1, further comprising:
dithering the gamma converted image data with N × N pixel units where N is an integer greater than or equal to 2.

5. The method of Claim 1, wherein the peripheral area (PA) surrounds the outer portion of the boosting area (BA).

6. A controller unit being adapted for performing a method according to one of the claims 1 to 5, comprising:
a local dimming logic board (100) being adapted for generating the plurality of local dimming signals (LDS) for individually driving the dimming blocks (420) in response to image data supplied from the external device, and for increasing the luminance value emitted by the backlight unit in the boosting area (BA) by boosting the local dimming signals (LDS) corresponding to the boosting area (BA) when the image data satisfies the boosting conditions set to increase a luminance in the boosting area (BA), and
a controller board (200) being adapted for receiving the image data from the local dimming logic board (100), for gamma converting the image data corresponding to the entire area except for the peripheral areas by using the reference gamma curve (R-CV) corresponding to the first gamma value, and for gamma converting the image data corresponding to the peripheral area (PA) into conversion image data using the conversion gamma curve (C-CV) corresponding to the second gamma value for displaying a darker luminance image than an image corresponding to the reference gamma curve (R-CV).

## Patentansprüche

1. Verfahren zum Verstärken eines angezeigten Bilds einer Flüssigkristallanzeige durch lokale Verstärkung, wobei die Flüssigkristallanzeige eine Rückleuchteinheit beinhaltet, die eine Vielzahl von Dimmblöcken (430) aufweist, die unabhängig voneinander von jeweiligen lokalen Dimmsignalen (LDS) angesteuert werden, wobei das Verstärken das Erhöhen der Helligkeit eines Teilbereichs der Dimmblöcke umfasst, wobei das Verfahren Folgendes umfasst:
Analysieren von Bilddaten, die von einer externen Quelle bereitgestellt werden, um zu bestimmen, ob die Bilddaten Verstärkungsbedingungen erfüllen oder nicht, die festgesetzt wurden, um eine Helligkeit in dem Teilbereich der Dimmblöcke (430), der im Folgenden mit Verstärkungsbereich (BA) bezeichnet wird, im Vergleich zu einem Randbereich (PA) der Dimmblöcke (430), der dem Verstärkungsbereich (BA) benachbart ist, zu erhöhen;
Erzeugen der Vielzahl von lokalen Dimmsignalen (LDS), um die Dimmblöcke (420) in Reaktion auf die Bilddaten einzeln anzusteuern;
Erhöhen des Helligkeitswerts in den dem Verstärkungsbereich (BA) entsprechenden lokalen Dimmsignalen (LDS), wenn die Bilddaten die Verstärkungsbedingungen erfüllen;
Konvertieren der Bilddaten eines Randbereichs (PA) in Konvertierungsbilddaten, so dass die Helligkeit des dem Verstärkungsbereich (BA) benachbarten Randbereichs (PA), verringert wird, wobei der Schritt des Konvertierens Folgendes umfasst:
Gammakonvertieren von Bilddaten, die einem gesamten Bereich mit Ausnahme des Randbereichs (PA) entsprechen, indem eine Referenz-Gammakurve (R-CV) verwendet wird, die einem ersten Gammawert entspricht; und
Gammakonvertieren von Bilddaten des Randbereichs (PA), indem eine Konvertierungs-Gammakurve (C-CV) verwendet wird, die einem zweiten Gammawert entspricht, um ein Bild mit dunklerer Helligkeit als ein Bild anzuzeigen, das der Referenz-Gammakurve (R-CV) entspricht.

2. Verfahren nach Anspruch 1, wobei der jeweilige Gammawert der verwendeten Konvertierungs-Gammakurve (C-CV) proportional zum maximalen Helligkeitswert im Verstärkungsbereich (BA) steigt.

3. Verfahren nach Anspruch 1, wobei die Referenz-Gammakurve (R-CV) einen Gammawert von etwa 2,2 aufweist und die Konvertierungs-Gammakurve (C-CV) einen größeren Gammawert im Bereich zwischen etwa 2,2 bis etwa 3,0 aufweist.

4. Verfahren nach Anspruch 1, ferner umfassend:
Dithern der gammakonvertierten Bilddaten mit N × N Pixeleinheiten, wobei N eine Ganzzahl größer oder gleich 2 ist.

5. Verfahren nach Anspruch 1, wobei der Randbereich (PA) den äußeren Abschnitt des Verstärkungsbereichs (BA) umgibt.

6. Steuerungseinheit, die dafür geeignet ist, ein Verfahren gemäß einem der Ansprüche 1 bis 5 auszuführen, umfassend:
eine Logikplatine (100) zum lokalen Dimmen, die dafür geeignet ist, die Vielzahl von Dimmsignalen (LDS) zu erzeugen, um die Dimmblöcke (420) in Reaktion auf die von der externen Vorrichtung bereitgestellten Bilddaten einzeln anzusteuern und um den von der Rückleuchteinheit in dem Verstärkungsbereich (BA) ausgestrahlten Helligkeitswert zu erhöhen, indem die dem Verstärkungsbereich (BA) entsprechenden lokalen Dimmsignale (LDS) verstärkt werden, wenn die Bilddaten die Verstärkungsbedingungen erfüllen, die festgesetzt wurden, um eine Helligkeit im Verstärkungsbereich (BA) zu erhöhen; und
eine Steuerungsplatine (200), die dafür geeignet ist, die Bilddaten von der Logikplatine (100) zum lokalen Dimmen zu empfangen, um die Bilddaten, die dem gesamten Bereich mit Ausnahme der Randbereiche entsprechen, zu gammakonvertieren, indem die Referenz-Gammakurve (R-CV) verwendet wird, die dem ersten Gammabereich entspricht, und um die Bilddaten, die dem Randbereich (PA) entsprechen, in Konvertierungs-Bilddaten zu gammakonvertieren, indem die Konvertierungs-Gammakurve (C-CV) verwendet wird, die dem zweiten Gammawert entspricht, um ein Bild mit dunklerer Helligkeit als ein Bild anzuzeigen, das der Referenz-Gammakurve (R-CV) entspricht.

## Revendications

1. Procédé d'intensification d'une image affichée d'un afficheur à cristaux liquides par intensification locale, l'afficheur à cristaux liquides comportant un ensemble de rétroéclairage ayant une pluralité de blocs de gradation (430) qui sont pilotés indépendamment par des signaux de gradation locale (LDS) respectifs, dans lequel l'intensification comprend l'augmentation de la luminance d'une zone de portion des blocs de gradation,
le procédé comprenant :
l'analyse de données d'image fournies depuis un dispositif externe pour déterminer si les données d'image satisfont ou non des conditions d'intensification fixées afin d'augmenter une luminance dans la zone de portion des blocs de gradation (430), ci-après désignée par zone d'intensification (BA), en comparaison à une zone périphérique (PA) des blocs de gradation (430) adjacente à la zone d'intensification (BA) ;
la génération de la pluralité de signaux de gradation locale (LDS) pour piloter individuellement les blocs de gradation (420) en réponse aux données d'image ;
l'augmentation de la valeur de luminance des signaux de gradation locale (LDS) correspondant à la zone d'intensification (BA), lorsque les données d'image satisfont les conditions d'intensification ;
la conversion des données d'image d'une zone périphérique (PA) en données d'image de conversion de sorte que la luminance de la zone périphérique (PA) adjacente à la zone d'intensification (BA) soit diminuée, dans lequel l'étape de conversion comprend :
la conversion gamma de données d'image correspondant à une zone entière à l'exception de la zone périphérique (PA) en utilisant une courbe gamma de référence (R-CV) correspondant à une première valeur gamma, et
la conversion gamma de données d'image de la zone périphérique (PA) en utilisant une courbe gamma de conversion (C-CV) correspondant à une seconde valeur gamma pour afficher une image de luminance plus sombre qu'une image correspondant à la courbe gamma de référence (R-CV).

2. Procédé selon la revendication 1, dans lequel la valeur gamma respective de la courbe gamma de conversion (C-CV) utilisée augmente proportionnellement à la valeur de luminance maximale dans la zone d'intensification (BA).

3. Procédé selon la revendication 1, dans lequel
la courbe gamma de référence (R-CV) a une valeur gamma d'environ 2,2, et la courbe gamma de conversion (C-CV) a une valeur gamma plus grande dans la plage d'environ 2,2 à environ 3,0.

4. Procédé selon la revendication 1, comprenant en outre :
le tramage des données d'image à conversion gamma avec N x N unités de pixel où N est un nombre entier supérieur ou égal à 2.

5. Procédé selon la revendication 1, dans lequel la zone périphérique (PA) entoure la portion extérieure de la zone d'intensification (BA).

6. Unité de contrôleur adaptée pour réaliser un procédé selon l'une des revendications 1 à 5, comprenant :
une carte logique de gradation locale (100) adaptée pour générer la pluralité de signaux de gradation locale (LDS) pour piloter individuellement les blocs de gradation (420) en réponse à des données d'image fournies depuis le dispositif externe, et pour augmenter la valeur de luminance émise par l'unité de rétroéclairage dans la zone d'intensification (BA) par intensification des signaux de gradation locale (LDS) correspondant à la zone d'intensification (BA), lorsque les données d'image satisfont les conditions d'intensification fixées pour augmenter une luminance dans la zone d'intensification (BA), et
une carte contrôleur (200) adaptée pour recevoir les données d'image en provenance de la carte logique de gradation locale (100), pour la conversion gamma des données d'image correspondant à la zone entière à l'exception des zones périphériques en utilisant la courbe gamma de référence (R-CV) correspondant à la première valeur gamma,
et pour la conversion gamma des données d'image correspondant à la zone périphérique (PA) en données d'image de conversion à l'aide de la courbe gamma de conversion (C-CV) correspondant à la seconde valeur gamma pour afficher une image de luminance plus sombre qu'une image correspondant à la courbe gamma de référence (R-CV).
